# EUROPEAN PATENT SPECIFICATION

(11) **EP 0 879 672 B1**
(45) Date of publication and mention of the grant of the patent: **02.10.2002**
(21) Application number: 98500115.5
(22) Date of filing: 08.05.1998
(51) Int. Cl.: B23Q 1/70, B23Q 5/10, H02K 7/14

(54) **Coupling of the spindle of the headstock to the rotor in a lathe**
Kupplung der Spindel eines Kopfstückes mit dem Anker einer Drehbank
Accouplement de la broche poupée au rotor entraîneur dans un tour

(30) Priority: 19.05.1997 ES 9701068
(43) Date of publication of application: 25.11.1998
(73) Proprietor: Danobat, S. Coop., 20870 Elgoibar (Guipuzkoa) (ES)
(72) Inventor: Vicario Burgos, Angel, 20870 Elgoibar (Gipuzkoa) (ES)

(56) References cited:
- EP-A- 0 525 405
- EP-A- 0 693 233
- US-A- 4 534 686
- PATENT ABSTRACTS OF JAPAN vol. 016, no. 141 (M-1232), 9 April 1992 (1992-04-09) -& JP 04 002438 A (YAMAZAKI MAZAK CORP), 7 January 1992 (1992-01-07)
- PATENT ABSTRACTS OF JAPAN vol. 017, no. 003 (E-1301), 6 January 1993 (1993-01-06) -& JP 04 236145 A (FANUC LTD), 25 August 1992 (1992-08-25)

## Description

The present invention relates to the working-spindle of the headstock of a lathe or milling machine and, more specifically, to the coupling of the spindle shaft and the hollow rotor of the headstock drive motor, according to the preamble of claim 1.

### PRIOR ART

Lathe headstock working-spindles are known in which the motor stator is incorporated into an outer frame on the machine, and the spindle shaft is supported by bearings as on the machine tool described in EP-743511-A1. The bearings supporting the working-spindle shaft at both ends are subject to wear and need to be replaced.

In the spindles whose shaft is shrunk directly in to the drive rotor hollow, with their axis perfectly aligned, and their front nose for attaching the chuck is of larger diameter than the bearings, the latter can only be removed for replacement from the shaft rear end. Thus, the spindle must first be detached from the rotor, with the aid of a hydraulic pump then, once the bearings are replaced, the shaft must once more be shrunk on the rotor with the cooperation of a heating furnace. The need for this special equipment or tooling involves taking them to the lathe site and costly replacement operations.

DE-4122545 describes a solution for the easy removal of the bearings from the front end of the spindle without the need to detach the rotor spindle shaft. This solution makes spindle construction expensive, since it is formed in two parts, one of them the detachable spindle front flange which enables the bearings to slide to the front of the lathe.

Patent Abstract of Japan vol. 016, no. 141 (M-132)- & JP 04002438 A, discloses a cooling structure for machine tool spindle driving motor, comprising a motor stator, a rotor with an intermediate sleeve in alignement with the axis of the rotor, a hollow shaft of the spindle directly connected to the rotor sleeve for driving the spindle in its rotation, a set of front bearing supporting the spindle shaft, and the hollow shaft has a portion of thickened wall attached to the intermediate rotor sleeve, and cooling means for conducting a coolant inside the hollow spindle shaft.

### DISCLOSURE OF THE INVENTION

The object of the invention is a coupling for the shaft of the spindle of the headstock of a lathe or milling machine to the hollow rotor of the headstock drive motor, as defined in claim 1. With a coupling according to the invention, the front bearings are replaced following detachment of the spindle but without the need of the help of equipment or tooling either for detachment or for subsequent shrinking on to the rotor, all the operations being done manually using standard tools.

### DESCRIPTION OF THE DRAWINGS

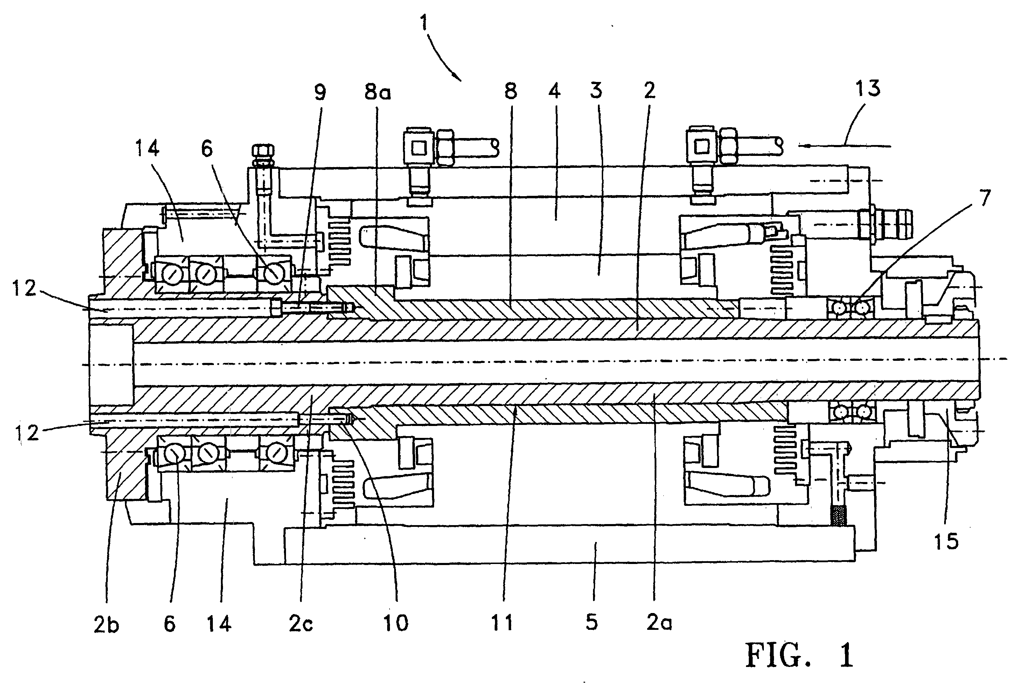

FIGURE 1 is a lengthwise cross-section of the headstock spindle, with the motor, according to an embodiment of the invention.

### DETAILED DESCRIPTION OF THE INVENTION

In the embodiment of the invention of the coupling into the lathe headstock 1 shown in Figure 1, the shaft 2a of the spindle 2 is coupled with the rotor 3, and the stator 4 of the motor is incorporated into the lathe frame 5. The motor 3,4 is of AC voltage type and water-cooled from the inlet 13, has a hollow rotor 3 to drive lathe and milling machine headstocks, of a high rigidity because of the fitting of the motor components between the main spindle bearings 6,7. The headstock of the workpiece is fitted to the frontal nose 2b of the spindle, and the spindle shaft 2a, which is also hollow, is driven by the spindle 2 having their respetive axis correctly aligned in order to ensure a balanced rotation.

The shaft 2a is supported at each end with a set of bearings 6,7, the front bearings 6 are shielded by the front motor cover 14 and enclosed behind the frontal nose 2b of the spindle between the cover 14 and the rotor 3, while the frontal nose 2b closes the cover 14 frontally. The rear bearings 7 are shielded by the rear motor cover 15 and are easily removable by hand from the rear end of the shaft 2a for replacement. On the other hand, the front bearings 6 are housed between the frontal nose 2b of the spindle and the motor 3,4, and so must be removed by first detaching the spindle 2 of the rotor 3, and then extracting it from the machine in order to take out the bearings 6 by sliding them to the rear end of the shaft 2a. Once the bearings 6, 7 have been replaced, the shaft 2a is once more attached to the rotor 3, completely aligned. In order to achieve such detachement of the spindle 2 from the rotor 3 without the help of assembly and dismantling equipment, the shaft 2a of the spindle is coupled to the rotor 3 by means of the coaxial sleeve 8, which pressure fits the rotor 3 by means of hot shrinking.

The inside diameter of the coupling sleeve 8 and the diameter of the spindle shaft 2 are adjusted to ensure a minimum play 11 enabling them to be fitted without the aid of equipment. The coupling sleeve 8 is attached to the spindle shaft 2a, to be driven in rotation by means of a set of drive bolts 9 and pins 10 distributed on the front circular crown wheel of the coupling sleeve 8, for which the front end wall 8a is thickened and juxtaposed to the thickened wall part 2c of the shaft 2. The set of bolts 9 and pins 10 fit in holes 12 opened from the frontal nose 2b of the spindle for ease of access.

The wall of the sleeve 8 is of a given thickness, limited by the inside diameter of the rotor 3, but thick enough to prevent deformation during compression by the rotor 3 following shrinking, and by the resistance to the torsion stress due to the traction of the spindle 2.

## Claims

1. Coupling of a spindle (2) of a headstock (1) to a rotor on a lathe or milling machine, the spindle (2) being used for a work-piece headstock, wherein the rotor (3) drives a hollow shaft (2a) of the spindle in its rotation through an intermediate sleeve (8), the stator (4) of the motor is incorporated into the frame (5) of the lathe, and the shaft (2a) of the spindle is supported by a set of bearings (6,7), **characterised in that** the rotor (3) has a coupling sleeve (8) pressure-shrunk in alignment with the axis of the rotor (3), and the spindle shaft (2a) is radially adjusted in the interior of rotor also in alignment and with a play (11) for manual extraction, the coupling sleeve (8) has a portion of thickened wall (8a) attached to the spindle (2) to be driven in rotation by the rotor (3), and the spindle shaft (2a) is further supported by a set of rear bearings (7) which can slide on the spindle shaft (2a), to be replaced once the spindle shaft is extracted.

## Patentansprüche

1. Kupplung einer Spindel eines Kopfstückes an einem Rotor einer Drehbank oder Fräsmaschine, bei welcher die Spindel (2) für ein Teilkopfstück verwendet wird, der Rotor (3) während seiner Drehbewegung über eine Zwischenbuchse (8) eine hohle Achse (2a) der Spindel antreibt, der Stator (4) des Motors im Gehäuse (5) der Drehbank angeordnet ist und die Achse (2a) der Spindel auf einem Kugellagersatz (6,7) abgestützt wird, **dadurch gekennzeichnet, dass** in den Rotor (3) eine zur Achse des Rotors ausgerichtete Kupplungsbuchse (8) eingedrückt wird, und die Achse (2a) der Spindel in seinem Innern ebenfalls mit einem Spiel (11) angepasst wird, damit sie von Hand herausgezogen werden kann, und **dass** die Kupplungsbuchse (8) einen mit der Spindel (2) verbundenen verdickten wandbereich (8a) für die Antrieb durch den Rotor (3) aufweist, wobei sich die Achse (2a) der Spindel ausserdem auf einem hinteren Kugellagersatz (7) abstützt, der nach dem Ausbau der Spindel zum Austausch desselben auf der Achse (2a) der Spindel verschoben werden kann.

## Revendications

1. Accouplement d'une broche d'une poupée à un rotor dans un tour ou une fraiseuse, la broche (2) étant utilisée pour une poupée porte-pièces, où le rotor (3) entraîne un axe (2a) creux de la broche (2) dans sa rotation à travers une douille (8) intermédiaire, le stator (4) du moteur est incorporé à la carcasse (5) du tour et l'axe (2a) de la broche est supporté par un jeu de roulements (6,7), **caractérisé en ce que** le rotor (3) possède, calée à pression, une douille (8) d'accouplement en alignement avec l'axe du rotor (3), et l'axe (2a) de la broche vient s'y ajuster à l'intérieur, également en alignement, et avec un jeu (11) permettant son retrait manuel, et la douille (8) d'accouplement est dotée d'une partie de paroi (8a) grossie raccordée à la broche (2) pour son entraînement par le rotor (3), et l'axe (2a) de la broche est en plus supporté par un jeu de roulements (7) arrière qui peut être coulissé sur l'axe (2a) de la broche, pour son remplacement une fois la broche retirée.
